Europäisches Patentamt

European Patent Office

Office européen des brevets

(11) Publication number: **0 499 381 A1**

# EUROPEAN PATENT APPLICATION

(21) Application number: **92300727.2**

(22) Date of filing: **29.01.92**

(51) Int. Cl.5: **B01D 71/52**, C08J 5/22

(30) Priority: **15.02.91 GB 9103259**

(43) Date of publication of application:
**19.08.92 Bulletin 92/34**

(84) Designated Contracting States:
**AT BE CH DE DK ES FR GB GR IT LI LU NL SE**

(71) Applicant: **IMPERIAL CHEMICAL INDUSTRIES PLC**
**Imperial Chemical House, Millbank**
**London SW1P 3JF(GB)**

(72) Inventor: **Colquhoun, Howard Matthew**
**8 Grove Park**
**Knutsford, Cheshire WA16 8OA(GB)**
Inventor: **Rogers, Victor**
**320 Bradford Road, Pudsey**
**Leeds OS28 7TO(GB)**
Inventor: **Simpson, Alan Frederick**
**23 Garsdale Avenue**
**Rainhill, Merseyside(GB)**

(74) Representative: **Draggett, Peter Thornton et al**
**Imperial Chemical Industries PLC P.O. Box 6**
**Bessemer Road**
**Welwyn Garden City Herts AL7 1HD(GB)**

(54) **Membranes.**

(57) A process for the preparation of a hollow fibre membrane comprising an at least partially crystalline aromatic ether ketone polymer which process comprises the steps of

A. preparing a hollow fibre membrane from a solution of an at least partially crystalline aromatic ether ketone polymer in a strong acid by contacting the solution with a non-solvent for the polymer; and

B. drawing the fibre prepared in Step A to increase the length thereof by 5-50%.

Fig.1.

EP 0 499 381 A1

The present invention relates to hollow-fibre asymmetric membranes, particularly polyaryletherketone hollow-fibre asymmetric membranes and to a method for the preparation thereof.

Ultrafiltration membranes are hereinafter referred to, for convenience, as "UF" membranes.

Asymmetric UF membranes prepared from crystallisable polyaryletherketones have been described, for example, in our EP 0,382,356. Whereas such membranes possess high mechanical strengths, good temperature resistance and resistance to organic liquids which are solvents and/or swelling agents for certain other polymers, they tend to have relatively low permeabilities compared with commercially available UF membranes prepared from less robust polymers, eg polyarylethersulphones.

A method for improving the permeability of flat-sheet polyaryletherketone UF membranes is described in EP 0,368,003. In that patent specification, it is disclosed that such an improvement may be effected by adding a small amount of a halogenated hydrocarbon, e.g. 5% w/w chloroform, to a solution of PEEK in a certain strong non-sulphonating acid, e.g. methanesulphonic acid, prior to casting a flat sheet membrane therefrom.

It is known (Encyclopaedia of Polymer Science and Technology, 1971, Vol 15, 259, John Wiley & Sons, New York), that cold drawing can significantly reduce the permeability of certain hollow fibre membranes.

However, we have now found that where a polyaryletherketone hollow fibre membrane is stretched, typically between 5 and 50%, its flux is increased but the MW cut off remains unchanged.

Such stretched hollow fibre membranes are useful for ultrafiltration, microfiltration, or as the support in a composite membrane for reverse-osmosis or gas separation.

According to the present invention there is provided a process for the preparation of a hollow fibre membrane comprising an at least partially crystalline aromatic ether ketone polymer which process comprises the steps of

A. preparing a hollow fibre membrane from a solution of an at least partially crystalline aromatic ether ketone polymer in a strong acid by contacting the solution with a non-solvent for the polymer; and

B. drawing the fibre prepared in Step A to increase the length thereof by 5-50%.

Preferably the increase is between 5 and 20%, more preferably about 10%. Above 50% extension, the selectivity is reduced, i.e. the Molecular Weight cut-off (MWCO) is reduced. Below 5% extension, no advantage is obtained.

Drawing of the fibre in Step B is typically carried out by processes known in the fibre art e.g.

from a slow to a fast-moving roller. However, we do not exclude the possibility that alternative drawing methods may be used. For example, particularly for research purposes, an Instron stress/strain tester, or manual drawing may be used.

By "partially crystalline" we mean that the level of crystallinity is at least about 10%. The level of crystallinity is preferably at least 15%, more preferably at least 20% and particularly more preferably at least 30% weight fraction. Such crystallinity is measured by wide angle X-ray diffraction as described by Blundell and Osborn (Polymer 24, 953, 1983).

By "aromatic ether ketone polymer" we mean a polymer in which inter-ring ether linkages and inter-ring ketone linkages together provide at least a major portion of the linkages between aromatic units in the polymer backbone. We do not exclude the possibility that a portion of the aromatic rings may be replaced by a heterocyclic ring, eg pyridine.

As examples of aromatic ether ketone polymers of which the membrane prepared by the process according to the present invention may be comprised may be mentioned inter alia polymers and copolymers illustrated in the drawings appended hereto.

In the drawings:

Figure 1 illustrates polymer chains in which the aromatic rings are joined by ether or ketone bonds (I-VI);

Figure 2 illustrates polymer chains in which a portion of the aromatic rings are joined by direct links (VII-IX)) or are bicyclic rings (X);

Figure 3 illustrates copolymer units bearing inter-cyclic -SO$_2$- bonds (XI-XII); and

Figure 4 illustrates certain copolymers containing ketone and ether links (XV) or in addition, a mixture of biphenyl and sulphone linkages (XIV and XVI).

Each such polymer-type is hereinafter referred to for convenience by the trivial name appended thereto in the drawings.

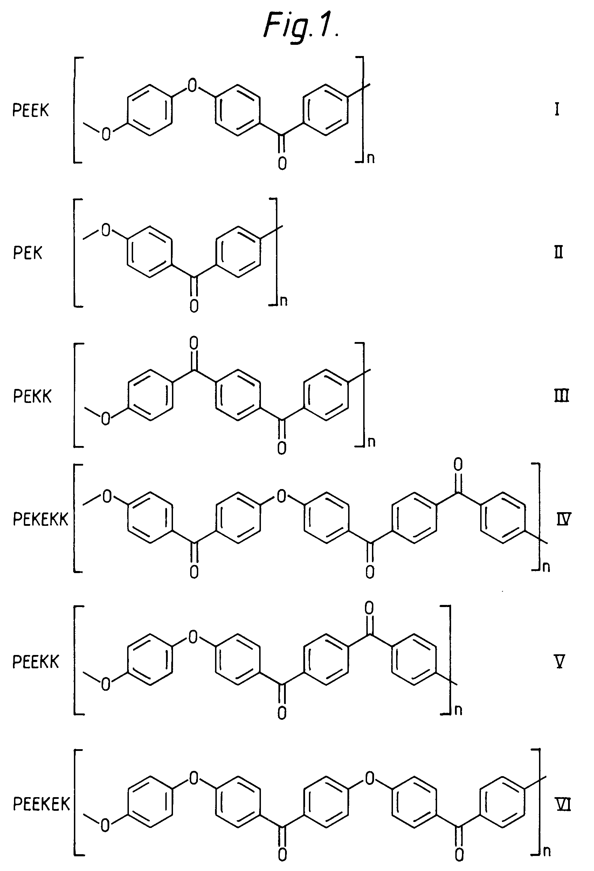

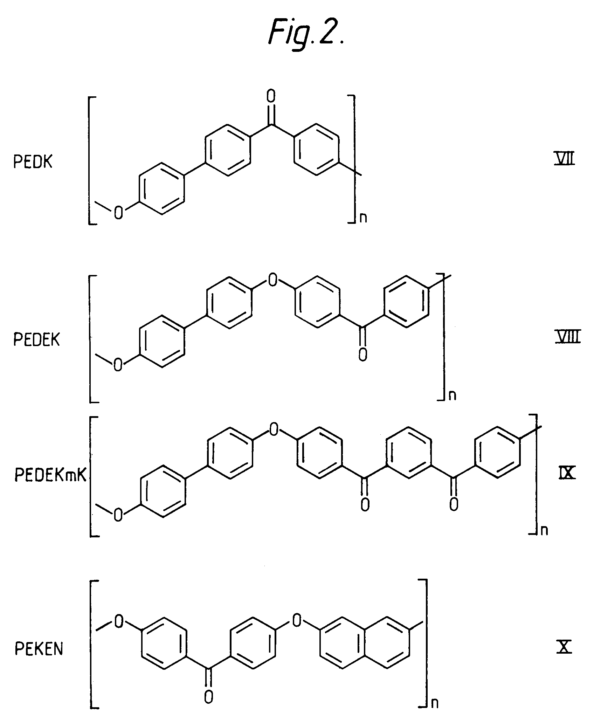

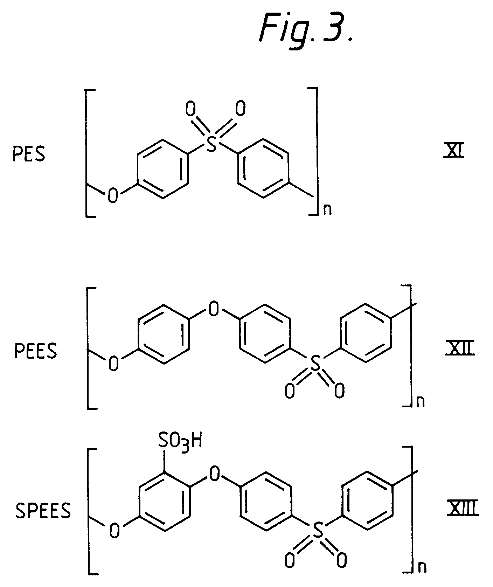

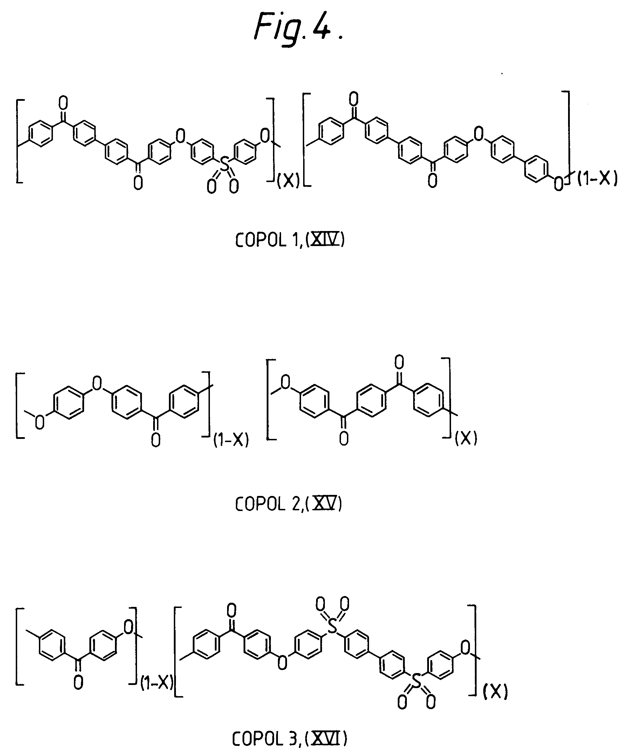

It will be appreciated that in Figures 1-4,

E represents an ether linkage;

K represents a ketone linkage;

D represents a direct linkage;

m represents a meta substituted aromatic ring;

N represents a naphthalene ring; and

S represents a sulphone linkage except where it is used as a prefix to the polymer trivial name where it represents "sulphonated".

We do not exclude the possibility that at least a portion of the ether linkages in the polymers illustrated in Figures 1-4 may be replaced by thioether linkages.

The preparation of polymers illustrated in certain Figures of the drawings are described in inter alia Journal of Macromolecular Science, Review of Macromolecular Chem. Phys., 27 (2), 313-341, 1987 (General Formulae I-VIII); EPA 0,323,076 (General Formula IX); Polymer 1984, vol 25 (August), 1151 (General Formula X); EPA 0,194,062 (General Formula XIV) and EPA 0,397,356 (General Formula XVI).

The at least partially crystalline aromatic ether ketone polymer of which the membrane according to the present invention is comprised is preferably a homopolymer, e.g. PEEK or PEK.

However, we do not exclude the possibility that it may be a copolymer e.g. PEEK/PEK, PEEK/PES, PEK/PES, PEEK/PEES, wherein the copolymer units PES and PEES are represented by the General Formulae XI-XII in the drawings appended hereto.

It will be appreciated that where the at least partially crystalline aromatic ether ketone polymer is a copolymer the nature and molar percentage of the "comonomer" will be chosen such that it does not unduly decrease the level of crystallinity of the polyetherketone component of the copolymer and the inter-aromatic links therein are non-hydrolysable under the conditions of preparation and expected use of the membrane.

As examples of comonomer units may be mentioned inter alia aromatic sulphones, sulphides, and biaryls.

We do not exclude the possibility that the membrane may be formed from a mixture of polymers at least one of which is an aromatic ether ketone polymer, e.g. PEEK/PEK or PEK/PES.

A hollow fibre membrane may be formed by extruding the aromatic ether ketone polymer solution through the outer annulus of a coaxial die. Through the inner nozzle thereof there is a flow of suitable fluid, e.g. an inert gas, or a liquid which is a non-solvent for the polymer.

The precipitated membrane is then allowed to remain in contact with the non-solvent for a time sufficient to allow substantially complete gelation of the polymer, then removed from the non-solvent.

The residual strong acid/non-solvent is removed from the membrane by treatment with an aqueous medium, e.g. water or an aqueous base, at an appropriate temperature, e.g. between room temperature and the boiling point of water. Often, further treatment with an organic medium, e.g. acetone, is necessary to reduce the amount of acid present in the membrane further.

The membrane prepared by the process according to the present invention may be subjected to a treatment to enhance crystallinity. As examples of such treatment may be mentioned inter alia heating dry above the Tg of the polymer; treatment with a polar aprotic solvent, e.g. acetone, dimthylformamide (DMF) or dimethylacetamide (DMA).

Where DMF or DMA is used in such treatments it is later removed by a suitable further treatment, e.g. by washing with acetone.

Preferably the strong acid is water-free although we do not exclude the possibility that it may contain a small amount, for example up to about 10%, of water.

It will be appreciated that the strong acid will be chosen in the light of the structure of the aromatic ether ketone polymer. For example, it should not react chemically with the polymer to unduly reduce the crystallinity thereof. For example, whereas 98% sulphuric acid reacts unduly with polyetheretherketone (PEEK) and should not be used therewith, it can advantageously be used with polyetherketone (PEK) in the process according to the present invention. The strong acid should be a good solvent for the polymer and, after membrane formation, should be readily extractable therefrom.

We do not exclude the possibility that the strong acid used in the process according to the present invention may be a mixture of acids, e.g. sulphuric acid and acetic acid. It will be appreciated that where one of the acids in the mixture is a non-solvent for the polymer the concentration thereof will be insufficient to inhibit solvation of the polymer in the mixture.

For example, where the strong acid is a mixture of sulphuric acid and acetic acid the concentration of acetic acid is typically less than 15% w/w.

As examples of strong acids for use in the process of the present invention may be mentioned - inter alia sulphuric acid, liquid hydrogen fluoride, methanesulphonic acid, fluoromethanesulphonic acid, and di- and tri-fluoromethanesulphonic acid.

It will be appreciated that the skilled man will take appropriate precautions where he uses any of the above acids.

We do not exclude the possibility that a further solvent may be used in combination with the strong acid, with the proviso that it does not

a) unduly impair the solvent power of the strong acid, or

b) react with the strong acid or unduly react with the polymer in the presence of the strong acid.

As typical examples of such further solvents may be mentioned inter alia liquid sulphur dioxide, 1,2,4-trichlorobenzene, 1,2-dichloroethane, dichloromethane, dichloroacetic acid and trifluoroacetic acid.

We have found that the presence in the strong acid of a small amount, typically less than 10%, of a non-solvent, for example water or an organic compound, e.g. acetophenone, or benzophenone, often impairs the solvency slightly.

It also has the advantage that the gelation time for membrane formation is reduced allowing a higher rate of membrane production in Step A and may increase the porosity of the membrane or otherwise modify its structure.

Typically, the concentration of the aryl ether ketone polymer in the strong acid in Step A of the process according to the present invention is between 5 and 50% w/w.

The present invention is further illustrated by reference to the following Examples.

From the Examples it can be seen that on cold drawing the water flux at a given MWCO of hollow-fibre polyetherketone membranes is increased.

### Example 1

This Example illustrates a hollow fibre membrane prepared by the process according to the present invention.

In Step A, a hollow fibre membrane (internal diameter 0.6 mm, external diameter 1.1 mm) was prepared by the method described in our EPA 0382356, by spinning a 10 wt% solution of polyetherketone (Victrex PEK, melt viscosity 0.19 $kNs/m^2$ at 1000 $s^{-1}$ at 400°C) in 98% sulphuric acid, through a tube-in-hole spinneret (hole diameter 1.5 mm, tube diameter 0.55 mm) into a water-bath at 25°C, via an air-gap of 5 cm. Water at the same temperature was injected into the bore of the fibre to act as internal coagulant, with a water injection rate of 16.5 $cm^3$/min.

The fibre was washed in hot water and stored wet.

It was found to have a pure water flux of 76 $l/m^2$/hr at 2 bar pressure, and a MWCO (as measured by the MW at which 90% rejection of aqueous dextran occurred) of 26,000.

In Step B, a sample of the fibre was drawn manually, at 25°C, to increase its length by 10%.

It was found that the water flux had increased to 137 $l/m^2$/hr and the MWCO decreased slightly to 22,000.

### Example 2

This Example illustrates a further hollow fibre membrane prepared by the process according to the present invention.

A hollow fibre membrane was prepared by the method described in Step A of Example 1, except that a 12 wt% instead of 10% solution of polymer was used and the temperature of both the internal and external water coagulant was 8°C instead of 25°C.

The membrane was found to have a pure water flux of 48 $l/m^2$/hr, and a MWCO for dextrans of 24,000.

In Step B, a sample of the fibre was drawn, at 25°C, to increase its length by 20%. It was found that the water flux had increased to 73 $l/m^2$/hr, and its MWCO increased slightly to 26,000.

### Example 3

This Example illustrates a yet further hollow fibre membrane prepared by the process according to the present invention.

A hollow fibre membrane was prepared as in Step A of Example 2, except that the spinning solution contained 10 wt% of polymer and 2 wt% of benzophenone instead of 12% polymer.

Residual benzophenone was extracted from the membrane by refluxing in a mixture of acetone, methanol and glycerol (volume ratio 7:2:1), the resulting membrane was found to have a pure water flux of 12 $l/m^2$/hr, and a MWCO of 5,000.

In Step B, a sample of the fibre was drawn to increase its length by 10%. It was found that the water flux had increased to 16 $l/m^2$/hr ad the MWCO decreased slightly to 3,000.

### Example 4

This Example illustrates a yet further hollow fibre membrane prepared by the process according to the present invention.

A hollow fibre membrane (internal diameter 1.6 mm, external diameter 2.0 mm) was prepared by the method described in Step A of Example 1, except that the spinneret had a hole diameter of 1.9 mm instead of 1.5 mm and a tube diameter of 0.55 mm. The internal coagulant was 40% (w/w) aqueous sulphuric acid, at an injection rate of 10.8 $cm^3$/min, and water was used as the external coagulant (both at 25°C).

The resulting membrane had a pure water flux of 115 $l/m^2$/hr and a MWCO of 19,000.

In Step B, a sample of the membrane was drawn to increase its length by 10%. It was found that the water flux increased to 190 $l/m^2$/hr and the MWCO was virtually unchanged at 18,000.

### Claims

1. A process for the preparation of a hollow fibre membrane comprising an at least partially crystalline aromatic ether ketone polymer (ie a polymer comprising aromatic units (including heterocyclic rings)in which inter-ring ether linkages and inter-ring ketone linkages together provide at least a major portion of the linkages between aromatic units in the polymer backbone) in which the level of crystallinity is at least about 10% weight fraction, as measured by wide angle X-ray diffraction, which process comprises the steps of

   A. preparing a hollow fibre membrane from a solution of an at least partially crystalline aromatic ether ketone polymer in a strong acid by contacting the solution with a non-solvent for the polymer; and

B. drawing the fibre prepared in Step A to increase the length thereof by 5-50%.

2. A process according to claim 1, which process comprises in the step B. drawing the fibre such that the increase is between 5 and 20%.

3. A process according to claim 1, which process comprises carrying out step B. by drawing the fibre.

4. A process according to claim 1, in which process the aromatic ether ketone polymer comprises chain units, comprising
aromatic rings joined by ether or ketone bonds of any of formulae (I) to (VI); and optionally aromatic rings joined by direct links of any of formulae (VII) to (IX);
bicyclic rings of formula (X);
copolymer units bearing inter-cyclic -$SO_2$- bonds of any of formulae (XI) to (XII); or
copolymer units containing ketone and ether links of formula (XV); or
in addition, a mixture of biphenyl and sulphone linkages of any of formulae (XIV) and (XVI).
all as in the drawings attached hereto;
in which
E represents an ether linkage;
K represents a ketone linkage;
D represents a direct linkage;
m represents a meta substituted aromatic ring;
N represents a naphthalene ring; and
S represents a sulphone linkage.

5. A process according to claim 1, in which process the polymer comprises units which comprise aromatic rings joined by ether or ketone bonds of any of formulae (I) to (VI); and optionally copolymer units of the formulae (XI) to (XII) in the drawings appended hereto.

6. A process according to claim 1, in which process the product polymer has a level of crystallinity of at least 30% weight fraction.

7. A process according to claim 1, which process comprises after the step B. of drawing the fibre the step of
heating of the membrane dry above the Tg of the polymer; or
treatment of the membrane with a polar aprotic solvent, which is later removed by washing.

8. A process according to claim 1, in step A. of which process the strong acid is water-free or contains up to about 10%, of water.

# *Fig.1.*

| | | |
|---|---|---|
| PEEK | (structure) | I |
| PEK | (structure) | II |
| PEKK | (structure) | III |
| PEKEKK | (structure) | IV |
| PEEKK | (structure) | V |
| PEEKEK | (structure) | VI |

# *Fig.2.*

PEDK
VII

PEDEK
VIII

PEDEKmK
IX

PEKEN
X

# Fig. 3.

PES     XI

PEES     XII

SPEES     XIII

EP 0 499 381 A1

# Fig.4.

COPOL 1,(XIV)

COPOL 2,(XV)

COPOL 3,(XVI)

9

## DOCUMENTS CONSIDERED TO BE RELEVANT

EP 92300727.2

| Category | Citation of document with indication, where appropriate, of relevant passages | Relevant to claim | CLASSIFICATION OF THE APPLICATION (Int. Cl.5) |
|---|---|---|---|
| A | US - A - 4 904 426 (LUNGARD et al.) * Column 1, lines 8-18; column 2, line 43 - column 3, line 29; claims 1,3,8,9 * | 1,4,5 | B 01 D 71/52 C 08 J 5/22 |
| A | US - A - 4 957 817 (CHAU et al.) * Abstract * | 1,4,5 | |
| A | US - A - 4 897 307 (BECK et al.) * Column 4, lines 22-28; column 2, line 48 - column 3, line 42 * | 1,4,5 | |
| A | US - A - 4 992 485 (KOO et al.) * Abstract * | 1,4,5 | |
| D | & EP-A-0 368 003 | | TECHNICAL FIELDS SEARCHED (Int. Cl.5) |
| D,A | EP - A - 0 382 356 (ICI) * Claim 1; fig. 1-4 * | 1,4,5 | B 01 D C 08 J |
| A | WO - A - 91/01 339 (THE DOW CHEMICAL) * Abstract; page 5, line 30 - page 7, line 33 * | 1,4,5 | |

The present search report has been drawn up for all claims

| Place of search | Date of completion of the search | Examiner |
|---|---|---|
| VIENNA | 21-05-1992 | WILFLINGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)